(19) Europäisches Patentamt
European Patent Office
Office européen des brevets

(11) **EP 1 868 719 B1**

(12) **FASCICULE DE BREVET EUROPEEN**

(45) Date de publication et mention de la délivrance du brevet:
**26.11.2008 Bulletin 2008/48**

(21) Numéro de dépôt: **06709307.0**

(22) Date de dépôt: **10.02.2006**

(51) Int Cl.:
**B01J 37/02** (2006.01)    **B01J 23/42** (2006.01)
**B01J 23/44** (2006.01)    **C10G 45/40** (2006.01)
**C07C 7/163** (2006.01)

(86) Numéro de dépôt international:
**PCT/FR2006/000326**

(87) Numéro de publication internationale:
**WO 2006/092476 (08.09.2006 Gazette 2006/36)**

(54) **PROCÈDE DE PRÉPARATION DE CATALYSEURS MULTIMETALLIQUES UTILISABLES DANS DES RÉACTIONS DE TRANSFORMATION DES HYDROCARBURES**

VERFAHREN ZUR HERSTELLUNG VON MULTIMETALLKATALYSATOREN, DIE BEI KOHLENWASSERSTOFFUMWANDLUNGSREAKTIONEN VERWENDET WERDEN KÖNNEN

METHOD OF PREPARING MULTIMETALLIC CATALYSTS THAT CAN BE USED IN HYDROCARBON CONVERSION REACTIONS

(84) Etats contractants désignés:
**DE GB IT NL**

(30) Priorité: **25.02.2005 FR 0501967**

(43) Date de publication de la demande:
**26.12.2007 Bulletin 2007/52**

(73) Titulaire: **Institut Français du Pétrole
92506 Rueil-Malmaison Cedex (FR)**

(72) Inventeurs:
• **UZIO, Denis
F-69360 Simandres (FR)**
• **PETIT-CLAIR, Carine
F-38200 Jardin (FR)**
• **PORTEJOIE, Frédéric
F-69440 Mornant (FR)**
• **FISCHER, Lars
F-38200 Seysuel (FR)**
• **COUPARD, Vincent
F-69120 Vaulx en Velin (FR)**

(56) Documents cités:
**EP-A- 0 311 084        EP-A- 0 979 673
EP-A- 0 979 807        US-A- 4 590 177
US-B1- 6 197 720**

## Description

Les procédés de conversion des hydrocarbures tels que le vaporeformage ou le craquage catalytique sont opérés à haute température et produisent une grande variété de molécules insaturées telles que l'éthylène, le propylène, les butènes linéaires, l'isobutène et les pentènes. En parallèle sont également formés des composés polyinsaturés contenant le même nombre de carbone : acétylène, propadiène et méthylacétylène (ou propyne), 1-2 et 1-3 butadiène, vinylacétylène et éthylacétylène, et enfin d'autres composés de point d'ébullition correspondant à la fraction essence (C5+). Tous ces composés doivent être éliminés pour permettre l'utilisation de ces différentes coupes dans les procédés de pétrochimie tels que les unités de polymérisation. Ainsi, la coupe C2 de vapocraquage a la omposition volumique moyenne suivante : 1,2% poids d'acétylène, 83,5% poids d'éthylène et 15,3% poids d'éthane. Pour la coupe C3, on trouve le même type de répartition avec une prédominance du propylène (90% poids) et des teneurs en propadiène et méthylacétylène de l'ordre de 3 à 8% poids. Les spécifications concernant les concentrations de ces composés polyinsaturés pour les unités de pétrochimie et de polymérisation sont très basses : 20-30 ppm de MAPD (MéthylAcétylène et PropaDiène) pour le propylène qualité chimique et inférieur à 10 ppm voire jusqu'à 1 ppm pour la qualité « polymérisation ». L'élimination du MAPD peut se faire par distillation ou par extraction par solvant.
L'hydrogénation sélective s'est progressivement imposée car ce procédé permet d'obtenir des rendements en propylène, dans le cas de la coupe C3, supérieurs aux procédés précités (102-103%). Cette réaction permet la conversion du méthyle acétylène et du propadiène en propylène en évitant la saturation totale conduisant au propane. Elle peut être réalisée en phase gaz ou liquide avec une préférence pour la phase liquide qui permet d'abaisser le coût énergétique et d'augmenter la durée de cycle des catalyseurs. Les conditions opératoires habituellement appliquées sont une pression d'environ 2 MPa, une température comprise entre 10 et 50°C et un ratio molaire hydrogène/(hydrocarbure à hydrogéner) compris entre 1 et 2. La réaction d'hydrogénation sélective peut également être réalisée en phase gazeuse, dans ce cas une température minimale de 40°C et maximale de 120°C sera choisie. Dans ces conditions, des taux d'hydrogénation supérieurs ou égaux à 99% peuvent être obtenus avec un rendement en propylène souvent supérieur à 100%. Cependant, pour des charges très concentrées en MAPD (teneurs supérieures à 4%) ou dans le cas de l'atteinte de spécifications sévères (« polymer grade »), la réaction d'hydrogénation se fait avec une perte plus ou moins importante de propylène.

Cette dernière voie a été largement explorée dans la littérature et des associations performantes ont été proposées pour les réactions d'hydrogénations sélectives. Par exemple, le brevet US5356851 nous enseigne qu'il est avantageux d'associer un métal du groupe VIII (préférentiellement le Pd) à un élément tel que l'indium ou le gallium pour des applications en hydrogénation sélective de composés polyinsaturés. De même des associations Pd-Cu (US5464802), Pd-Ag (US4547600), Pd-Sn et Pd-Pb (JP59227829) ou encore une combinaison de Pd et d'un métal alcalin (EP0722776) ont été identifiées pour leurs performances en hydrogénation.

Ces effets bimétalliques sont en général liés à l'interaction créée entre les deux éléments. Il apparaît ainsi que l'identification d'un système catalytique multimétallique est conditionnée par l'établissement de cette interaction.

Parmi, les méthodes permettant de contrôler les caractéristiques des particules bimétalliques (composition, taille), on peut citer les méthodes de réactions contrôlées de surface (US20020045544, J Barbier, J.M. Dumas, C. Geron, H Hadrane Appl. Catal 179, 1994, 116 (1-2), S. Szabo, I. Bakos, F. Nagy, T. Mallat, J. Electroanal. Chem.1989, 263, 137) mettant notamment en jeu des phénomènes d'oxydo réduction de surface.

La présente invention décrit un catalyseur et une méthode de préparation de catalyseurs multimétalliques supportés pour lesquels la taille, la composition ainsi que la répartition des particules bimétalliques dans les billes de support sont adaptées aux exigences des réactions d'hydrogénation sélective. En effet, il est connu de l'homme de l'art que pour les réactions d'hydrogénation de molécules polyinsaturées telles que les dioléfines ou les acétyléniques, la vitesse de réaction dépend de la taille des particules métalliques, ce résultat est généralement décrit sous le terme « sensibilité à la structure ». Un optimum est généralement observé pour une taille de l'ordre de 3 à 4 nm, cette valeur pouvant varier en fonction notamment de la masse moléculaire des réactifs (M. Boudart, W.C. Cheng, J. Catal. 106, 1987, 134, S. Hub, L. Hilaire, R. Touroude, Appl. Catal. 36 1988, 307).

Il est ainsi primordial d'obtenir une répartition en taille des particules (critère 1) centrée sur la valeur optimale ainsi qu'une dispersion minimale autour de cette valeur.

L'identification des couples bimétalliques a fait l'objet de très nombreux travaux dans le domaine des réactions d'hydrogénations sélectives (V Ponec, G.C Bond, Catalysis by Metal and Alloys, Elsevier, Amsterdam, 1995). Ces études ont en outre révélé la difficulté à obtenir l'effet de synergie souhaitée, cet effet étant conditionné au mode de synthèse choisi. Ainsi, la composition locale (critère 2) de la phase active joue un rôle clé dans l'atteinte de performances catalytiques élevées. Les rendements obtenus étant la résultante des transformations se produisant sur chaque particule, la composition de celles-ci devra être ajustée à la formulation optimale et les particules devront être homogènes entre elles.
Enfin, la répartition macroscopique des éléments dans les billes de support (critère 3) constitue également un critère important, principalement dans le cadre de réactions rapides et consécutives telles que les hydrogénations sélectives. Dans ce cas, il est préférable de déposer les éléments dans une fine couronne à la périphérie des grains de support afin d'éviter les problèmes de transfert de matière intragranulaire pouvant conduire à des défauts d'activité et une perte de sélectivité.

Il est particulièrement difficile de respecter simultanément ces trois critères et généralement les travaux permettant de réaliser de tels catalyseurs proposent de mettre en oeuvre des techniques de préparations très sophistiquées et non extrapolables aux échelles requises pour la production industrielle (Rousset J.L., Stievano L., Cadete Santos Aires F.J., Geantet C., Renouprez A.J., Pellarin M., J. Catal., 197(2) 2001 335).

Les méthodes d'imprégnation en excès (volume de solution à imprégner supérieur au volume poreux de la masse de support) ou à sec (volume de solution correspondant au volume poreux de la masse de support) de solutions acides de précurseurs métalliques permettent de faire varier la taille et la composition globale. Toutefois, à l'échelle locale des particules, ces paramètres demeurent souvent très hétérogènes. L'utilisation de précurseurs organométalliques permet l'obtention de catalyseurs homogènes en composition à l'échelle des particules mais dans ce cas, la taille des particules est généralement faible (inférieure au nanomètre) ou pour des particules de taille supérieure, la répartition en taille autour de cette valeur moyenne est large. En outre, ces précurseurs sont mis en oeuvre dans des solvants organiques qui sont défavorables d'un point de vue environnemental.

Il est donc décrit ici une nouvelle voie de préparation de catalyseurs bimétalliques respectant les trois critères précités.

## Résumé de l'invention

L'invention concerne un procédé de préparation d'un catalyseur comprenant au moins un métal M1 et un promoteur M2 sur un support, ledit procédé comprenant au moins les étapes suivantes:

a) La préparation d'une suspension colloïdale d'oxyde d'un premier métal M1 consistant en la neutralisation d'une solution basique par une solution minérale acide contenant le précurseur du métal M1,

b) La mise en contact du précurseur du promoteur M2, soit directement sous sa forme cristallisé soit après dissolution en phase aqueuse, avec la suspension colloïdale obtenue à l'étape a),

c) La mise en contact de la suspension colloïdale obtenue à l'étape b) avec le support,

d) Le séchage à une température comprise entre 30°C et 200°C, sous un flux d'air.

L'invention concerne également un procédé de traitement d'une coupe oléfinique mettant en oeuvre le catalyseur préparé selon l'une des revendications précédentes. De préférence, ladite coupe oléfinique est une coupe oléfinique légère contenant principalement des hydrocarbures à 3, 4 ou 5 atomes de carbones.

## Description Détaillée

La présente invention décrit un catalyseur bimétallique supporté et son procédé de fabrication permettant de préparer des catalyseurs dont les particules sont caractérisées par une répartition en taille étroite, une composition homogène à l'échelle des particules et une répartition macroscopique en couronne dans les billes de support. Une manière préférée de réaliser cette préparation est la suivante : la synthèse comprend la préparation de la solution contenant les précurseurs bimétalliques puis le dépôt sur le support. Une suspension colloïdale d'oxyde du premier métal M1 est synthétisée dans la première étape (étape a) par neutralisation partielle d'une solution basique contenant par exemple un alcalin (soude, potasse...) ou de l'ammoniaque par une solution minérale acide contenant le précurseur du métal M1. Le promoteur M2 est mis en contact dans une deuxième étape (étape b) avec la suspension colloïdale du métal M1 soit sous forme dissoute dans une solution aqueuse soit directement sous forme cristallisée.

Dans une troisième étape (étape c), la solution contenant les deux métaux est finalement mise en contact avec le support de préférence de manière contrôlée, par exemple au moyen d'un système d'aspersion. La solution peut subir une étape de maturation pendant une durée variable (de quelques minutes à plusieurs heures, de préférence 1 ou 2 heures) à des températures variables (de préférence 20°C à 100°C, de manière plus préférée 20°C à 80°C). Dans une étape ultérieure (étape d), le catalyseur est séché sous un flux d'air de manière à évacuer l'eau contenue dans les pores, puis éventuellement calciné au cours d'une étape e sous un flux d'air à des températures comprises entre 100 et 600°C, de manière préférée entre 150 et 500°C et de manière encore plus préférée entre 200 et 450°C. Le solide est généralement réduit sous un flux d'hydrogène avant son utilisation en catalyse, afin de convertir les éléments métalliques sous leur forme réduite. Une réduction in-situ (c'est-à-dire dans le réacteur) est possible.

La mise en contact de la solution d'imprégnation avec le support peut être réalisée par imprégnation à sec ou par imprégnation en excès en mode statique ou dynamique. L'ajout de stabilisants (tensioactifs anioniques, cationiques ou non ioniques, ions, polymères) peut avantageusement être effectué afin d'accroître la stabilité des suspensions colloïdales. Par exemple des composés de type sulfobétaïne, polyacrylate, dodécyl sulfate de sodium ou encore polyethylèneglycol peuvent être utilisés sans que cette liste soit exhaustive. Cet ajout pourra être effectué soit après la première étape de la préparation de la solution soit après la deuxième étape avant l'imprégnation sur le support.

Le métal M1 est sélectionné parmi les éléments des groupes 8,9 et 10 de la nouvelle classification périodique (CRC Handbook of Chemistry and Physics, Manuel CRC de Chimie et Physique, 81ème édition, 2000-2001, CRC Presse, Editeur David R. Lide, pages de garde ), de péférence M1 est un métal noble, de manière plus préféré le palladium ou le platine.

Le promoteur M2 est sélectionné parmi les éléments des groupes 8, 9, 10,13 et 14. Une première liste de promoteurs M2 préférés est constituée par: le nickel, le cuivre, l'argent, l'or, l'indium, l'étain et le germanium.

De préférence ledit promoteur M2, lorsqu'il est sélectionné parmi les éléments des groupes 8, 9,10, diffèrent du métal M1. De manière plus préférée le promoteur M2 est sélectionné parmi les éléments des groupes 11, 13 et 14, plus préférentiellement parmi les éléments du groupe 13 et 14, de manière très préférée le promoteur M2 est l'indium ou l'étain.

La teneur en métal M1, de préférence sélectionné parmi les éléments des groupes 8, 9 ou 10 de la nouvelle classification périodique, est préférentiellement comprise entre 0,01 et 5 % poids, de manière plus préférée entre 0,05 et 3% pds et de manière encore plus préférée entre 0,1 et 1% pds. La teneur en élément promoteur M2 est de préférence comprise entre 0,5 et 10 % poids, de manière préférée entre 0,05 et 5% pds et de manière encore plus préférée entre 0,1 et 4%pds.

Le support du catalyseur selon l'invention comprend au moins un oxyde réfractaire qui est généralement sélectionné parmi les oxydes de métaux des groupes 2, 3, 4,13 et 14 de la nouvelle classification périodique des éléments tel que par exemple les oxydes de magnésium, d'aluminium, de silicium, de titane, de zirconium, de thorium pris seuls ou en mélange entre eux ou en mélange avec d'autres oxydes de métaux de la classification périodique. On peut aussi utiliser le charbon. Les zéolithes ou tamis moléculaires de type X, Y, mordénite, faujasite, ZSM-5, ZSM-4, ZSM-8 etc, ainsi que les mélanges d'oxydes de métaux sélectionnés parmi les métaux des groupes 2, 3, 4 13 ou 14 avec un matériau zéolithique peuvent également convenir ainsi que les supports siliciques mésoporeux amorphes de la famille des MCM ou des SBA. Le support préféré est une alumine et plus particulièrement une alumine de surface spécifique comprise entre 5 et 200 $m^2/g$, de préférence de 10 à 150 $m^2/g$ et encore plus avantageusement de 20 à 140 $m^2/g$.

Avant utilisation, le catalyseur est généralement activé par un traitement sous flux d'hydrogène à une température comprise entre la température ambiante et environ 500°C, préférentiellement entre 100 et 400°C. Ce traitement peut être effectué dans le réacteur même où se réalisera la réaction catalytique (réduction in situ) ou de manière préalable dans un équipement indépendant (réduction hors site ou ex situ).

Le procédé de traitement des coupes oléfiniques selon l'invention comprend la mise en contact de ladite coupe dans des conditions appropriées avec le catalyseur préparé au moyen du procédé de préparation selon l'invention décrit précédemment. Les charges traitées sont les coupes légères oléfiniques contenant principalement 3 à 5 atomes de carbones (coupes comprenant des hydrocarbures C3,C4,C5) prises indépendamment après fractionnements ou en mélange (C3+C4+C5, C3+C4, ou encore C4+C5).

Les sélectivités élevées peuvent être obtenues par différents moyens : l'ajustement des conditions opératoires (température, rapport hydrogène/ composés polyinsaturés), l'optimisation du régime hydrodynamique mais surtout en ajustant la formulation catalytique.

De préférence, le procédé de traitement d'une coupe oléfinique selon l'invention est un procédé d'hydrogénation sélective. Selon l'invention, le traitement de la coupe oléfinique est généralement effectué sous pression en phase liquide ou gaz, en présence d'une quantité d'hydrogène en faible excès par rapport à la valeur stoechiométrique permettant l'hydrogénation des dioléfines et des acétyléniques. L'hydrogène et la charge sont injectés en courant ascendant ou descendant dans un réacteur à lit fixe dont la température est comprise entre 10°C et 200°C. La pression est généralement suffisante pour maintenir au moins 80 % poids de la charge à traiter en phase liquide à l'entrée du réacteur. Elle est généralement comprise entre 0,4 et 5 MPa, plus avantageusement entre 1 et 3 MPa. La vitesse spatiale horaire (définie comme le rapport du débit volumique de charge hydrocarbonée au volume de catalyseur), établie dans ces conditions est généralement comprise entre 1 et 50 $h^{-1}$ et de préférence entre 5 et 40 $h^{-1}$, et, de manière encore plus préférée, entre 10 et 30 $h^{-1}$.

Le procédé de l'invention peut aussi être mis en oeuvre selon des technologies différentes, telles que par exemple l'implantation du catalyseur dans une colonne de distillation ou dans des réacteurs - échangeurs.

Les exemples qui suivent, non limitatifs, illustrent l'invention.

### Exemple 1 : Catalyseur A (PdSn, comparatif)

Un catalyseur A est préparé par une méthode conventionnelle de double imprégnation à sec de solutions acides contenant les précurseurs moléculaires de palladium et d'étain. 100 $cm^3$ d'une solution contenant 0,3 g de palladium (ex : nitrate de palladium) et 0,3 g d'étain (ex : $SnCl_4,5H_2O$) sont successivement ajoutés goutte à goutte à 100 g de support alumine de surface spécifique 120 $m^2/g$, de volume poreux égal à 1 cm3/g et de granulométrie comprise entre 2,4 et 4 mm, centrée sur 3 mm. Le support est intermédiairement séché à 120°C entre les deux étapes d'imprégnation. Après une dernière étape de séchage en lit traversé sous courant d'air, le catalyseur final contient 0,3% pds de palladium et 0,3% d'étain.

### Exemple 2 : Catalyseur B ( Pd-Sn, selon l'invention)

Un catalyseur B est préparé par la mise en contact d'une solution colloïdale bimétallique, solution elle même préparée en deux étapes :

- neutralisation partielle de 20 cm$^3$ d'une solution 10N d'hydroxyde de sodium par 20 cm$^3$ d'une solution de nitrate de palladium contenant 1,5 g de palladium par litre
- ajout de 0,28 g d'étain ex SnCl$_4$, 5H$_2$O cristallisé à la suspension colloïdale précédente.

Après ajustement du volume, la solution est ensuite versée sur 100 g du même support que pour l'exemple 1. Le catalyseur est finalement séché à 120°C pendant 2h sous un débit d'air de 50 l/h. Il contient 0,3%pds de palladium et 0,28% pds d'étain

### Exemple 3 : Catalyseur C (Pd-Sn, comparatif)

Un catalyseur C est préparé par une première étape d'imprégnation au volume poreux du support de l'exemple 1 par une solution basique d'étain (ex SnCl$_4$,5H$_2$O) suivie après un séchage à 120°C par une deuxième imprégnation au volume poreux par une solution de nitrite de palladium Pd(NO$_2$)$_4$$^{2-}$, elle même préparée par ajout de nitrite de sodium à une solution acide de nitrate de palladium. Le catalyseur, finalement séché et activé comme précédemment, contient 0,3%pds de palladium et 0,3%pds d'étain.

### Exemple 4 : Catalyseur D (Pd-In, selon l'invention)

Un catalyseur D est préparé selon le même protocole que dans l'exemple 2 en remplaçant le précurseur SnCl$_4$, 5H$_2$O par l'InCl$_3$. Le catalyseur, finalement séché et activé comme précédemment, contient 0,3% pds de palladium et 0,3% pds d'indium.

### Exemple 5 : Catalyseur E

### (Pd-Sn, comparatif selon brevet US2001 0036902)

Un catalyseur E est préparé en imprégnant une suspension colloïdale contenant du palladium et de l'étain. Cette solution est préparée en ajoutant à une solution de soude à pH=14, 0,3 g de SnCl$_2$, 2H$_2$O, et ensuite 20 cm$^3$ d'une solution acide contenant du nitrate de palladium initialement à pH=0,8. Le catalyseur final contient 0,3% pds d'étain et 0,3% pds de palladium. L'analyse par microscopie électronique montre une taille moyenne des particules de 3 nm avec un écart type de 0,5. La distribution en taille est conforme à l'invention. En revanche, l'indice de bimétallicité est faible (50%).

### Exemple 6 : Catalyseur F ( Pd Ni, selon l'invention)

Un catalyseur F est préparé par la mise en contact d'une solution colloïdale bimétallique préparée selon les étapes suivantes :

- neutralisation partielle de 100 ml de solution d'hydroxyde de sodium 5 N par 100 cm$^3$ de nitrate de nickel (Ni(NO$_3$)$_2$, 6H$_2$O) à 150 gNi/l).
- ajout de 0,6 g de palladium sous forme Pd(NO$_3$)$_2$ à la suspension colloïdale précédente

Après ajustement du volume, la solution est ensuite versée sur 200 g du même support que pour l'exemple 1. Le catalyseur est finalement séché à 120°C pendant 2h sous un débit d'air de 50 l/h et contient 7,5 %pds de Ni et 0,3%pds de Pd.

### Exemple 7 : Catalyseur G (Pd Ag, selon l'invention)

Un catalyseur G est préparé par la mise en contact d'une solution colloïdale bimétallique synthétisée selon les étapes suivantes :

- dissolution dans 100 cm$^3$ de solution d'hydroxyde de sodium 5 N de 45 ml de nitrate de palladium à 8,5 gPd/l.
- ajout de 0,6 g d'argent sous forme de nitrate d'argent à la suspension colloïdale précédente.

Après ajustement du volume, la solution est ensuite versée sur 150 g du même support que dans l'exemple 1. Le catalyseur est finalement séché à 120°C pendant 2h sous un débit d'air de 50 l/h et contient 0,4 %pds d'argent et 0,25%pds de palladium.

### Exemple 8 : Caractérisation

Le tableau 1 regroupe les caractéristiques des différents catalyseurs en terme de taille moyenne, répartition en taille au travers de l'écart type (σ) autour de cette valeur moyenne, répartition macroscopique dans le support, et enfin indice de bimétallicité. La taille moyenne et l'écart type (σ) autour de cette taille moyenne

$$\sigma = \sqrt{\frac{\sum_i niXi^2}{\sum_i ni} - \left(\sum_i niXi\right)^2}$$

( avec ni échantillons de taille Xi) sont déterminées par des mesures en Microscopie Electronique en Transmission (MET) sur une population représentative de particules. L'analyse en microsonde de Castaing permet de déterminer le % pds de métal présent dans une couronne de support comprise entre R et 0,9 R , R étant le rayon de la bille (ou de l'extrudé). L'indice de bimétallicité est déterminé également par MET ou de préférence un STEM (Scanning Transmission Electron Microscopy) équipé d'un spectromètre à dispersion d'énergie des rayons X aussi nommée EDS ou EDX (Energy Dispersive Spectroscopy). Il correspond au pourcentage de particules pour lesquelles les deux éléments métalliques ont été détectées avec un critère de confiance (probabilité) de 95%. Cet indice est calculé à partir d'une analyse statistique sur une population représentative de particules.

**Tableau 1** : Caractéristiques des différents catalyseurs.

| | % pds dans couronne comprise dans R et 0,9R | | Taille moyenne des particules de palladium (nm) | Ecart type σ | Indice de Bimétallicité % |
|---|---|---|---|---|---|
| Catalyseur | Sn | Pd | | | |
| A | 40 | 43 | 1,8 | 2,5 | 30 |
| B | 81 | 82 | 1,8 | 0,4 | 90 |
| C | 22 | 12 | 3,3 | 1,8 | 85 |
| D | 72 | 69 | 1,9 | 0,7 | 91 |
| E | 80 | 85 | 3 | 0,6 | 50 |
| F | 70 (Ni) | 80 | 3,5 | 0,5 | 95 |
| G | 86 (Ag) | 83 | 2,1 | 0,6 | 92 |

### Exemple 9 : Tests catalytiques sur coupe C3 de vapocraquage.

Une charge comprenant 93,43 % poids de propylène, 3,77 % poids de propane, 1,55 % poids de méthylacétylène, 1,29 % poids propadiène, est traitée sur les différents catalyseurs présentées précédemment. Avant réaction, les catalyseurs d'hydrogénation sont activés sous un flux d'hydrogène à 150°C pendant 2h. 20 cm$^3$ de chaque catalyseur sont placés dans un réacteur tubulaire en mode upflow. Les conditions opératoires sont $P_{tot}$ = 35 bar, T=25°C, VVH=20 h$^{-1}$ et le ratio $H_2$/MAPD varie entre 1 et 2 mol/mol. La composition de la charge et des effluents est suivie par chromatographie en phase gaz. Les performances sont exprimées par le rapport [$C_3^={}_{effluent}$ - $C_3^={}_{charge}$]/[MAPD$_{effluent}$ - MAPD$_{charge}$] qui représente la sélectivité du catalyseur en fonction de la teneur résiduelle en MAPD (MAPD= %pds Méthylacétylène + %pds Propadiène).

**Tableau 2:** Sélectivités [$C_3^=$effluent - $C_3^=$charge]/[MAPDeffluent - MAPDcharge] en hydrogénation d'une coupe C3 de vapocraquage pour une teneur résiduelle en [MAPD] de 10 ppm dans les effluents.

| Catalyseur | Sélectivité |
|---|---|
| A | -10 |
| B | 69 |
| C | 2 |
| D | 58 |
| E | 30 |
| F | 45 |
| G | 55 |

### Exemple 10 : hydrogénation d'une charge modèle en C4 (butadiène)

Les propriétés hydrogénantes des différents catalyseurs sont ici évaluées en test discontinu parfaitement agité de type "Grignard". Deux grammes de catalyseur à base de palladium sont finement broyés (63-100 $\mu$m), réduits 2 heures à 200°C sous courant d'hydrogène pur, puis transférés sous gaz inerte dans le réacteur d'hydrogénation. La charge à hydrogéner est un mélange contenant 12 g de dioléfine (butadiène) dilué dans 180 $cm^3$ de n-heptane.

La température du test est maintenue à 20°C et la pression à 1 MPa. Les résultats sont rassemblés dans le tableau 3. La composition des effluents est suivie par analyse chromatographique. L'activité hydrogénante est exprimée en mol·min$^{-1}$·g $_{Pd}$$^{-1}$. La sélectivité est exprimée par le rapport de la vitesse initiale d'hydrogénation de la dioléfine à celle de l'oléfine externe (butène-1).

**Tableau 3: performances catalytiques en hydrogénation du butadiène 1,3.**

| Catalyseur | A | B | C | D | E | F | G |
|---|---|---|---|---|---|---|---|
| Activité (mol·min$^{-1}$·g Pd$^{-1}$) | 5,7 | 6,7 | 4,5 | 5,1 | 7,1 | 6,9 | 5,2 |
| Sélectivité | 1,2 | 3,6 | 2,8 | 3,2 | 2,3 | 3,1 | 3,8 |

## Revendications

1. Procédé de préparation d'un catalyseur comprenant au moins un métal M1 et un promoteur M2 sur un support, ledit procédé comprenant au moins les étapes suivantes:

   a) La préparation d'une suspension colloïdale d'oxyde d'un premier métal M1 consistant en la neutralisation d'une solution basique par une solution minérale acide contenant le précurseur du métal M1,
   b) La mise en contact du précurseur du promoteur M2, soit directement sous sa forme cristallisé soit après dissolution en phase aqueuse, avec la suspension colloïdale obtenue à l'étape a),
   c) La mise en contact de la suspension colloïdale obtenue à l'étape b) avec le support,
   d) Le séchage à une température comprise entre 30°C et 200°C, sous un flux d'air.

2. Procédé de préparation selon la revendication 1 comprenant en outre après l'étape d de séchage une étape e de calcination sous un flux d'air à des températures comprises entre 100 et 600°C.

3. Procédé de préparation selon l'une des revendications précédentes dans lequel le métal M1 est un métal sélectionné parmi les métaux des groupes: 8,9 ou 10 de la nouvelle classification périodique, de préférence un métal noble des groupes 8,9 ou 10.

4. Procédé de préparation selon l'une des revendications précédentes dans lequel le promoteur M2 est sélectionné parmi les groupes 8, 9 10,11, 13 et 14 de la nouvelle classification périodique.

5. Procédé de préparation selon l'une des revendications 1 ou 2 dans lequel le métal M1 et le platine et le précurseur M2 et sélectionné parmi le nickel, le cuivre, l'argent, l'or, l'indium, l'étain et le germanium.

6. Procédé de préparation selon l'une des revendications précédentes dans lequel la teneur en métal M1 est comprise entre 0,01 et 5 % poids et la teneur en promoteur M2 est comprise entre 0,5 et 10 %poids.

7. Procédé de préparation selon l'une des revendications précédente dans lequel le support comprend au moins un oxyde réfractaire sélectionné parmi les oxydes des métaux des groupes 2, 3, 4, 13 et 14 de la nouvelle classification périodique.

8. Procédé de préparation selon l'une des revendications précédente dans lequel le support est constitué par une alumine de surface spécifique comprise entre 5 et 200 m$^2$/g

9. Procédé de traitement d'une coupe oléfinique mettant en oeuvre le catalyseur préparé selon l'une des revendications précédentes.

10. Procédé de traitement selon la revendication 9 dans lequel la coupe oléfinique est une coupe oléfinique légère contenant principalement des hydrocarbures à 3, 4 ou 5 atomes de carbones.

11. Procédé de traitement selon la revendication 9, dans lequel le catalyseur est mis en oeuvre en lit fixe à une température comprise entre 10°C et 200°C, une pression suffisante pour maintenir au moins 80% poids de la charge à traiter en phase liquide à l'entrée du réacteur, et une vitesse spatiale horaire comprise entre 1 et 50 h$^{-1}$.

**Claims**

1. A process for preparing a catalyst comprising at least one metal M1 and a promoter M2 on a support, said process comprising at least the following steps:

   a) preparing a colloidal suspension of an oxide of a first metal M1, consisting of neutralizing a basic solution using a mineral acid solution containing the precursor of the metal M1;
   b) bringing the precursor of the promoter M2, either directly in its crystalline form or after dissolving in an aqueous phase, into contact with the colloidal suspension obtained in step a);
   c) bringing the colloidal suspension obtained in step b) into contact with the support;
   d) drying at a temperature in the range 30°C to 200°C, in a stream of air.

2. A preparation process according to claim 1 further comprising, after drying step d), a step e) for calcining in a stream of air at temperatures in the range 100°C to 600°C.

3. A preparation process according to one of the preceding claims, in which the metal M1 is a metal selected from metals from groups: 8, 9 or 10 of the new periodic table of the elements, preferably a noble metal from groups 8, 9 or 10.

4. A preparation process according to one of the preceding claims, in which the promoter M2 is selected from groups 8, 9, 10, 11, 13 and 14 of the new periodic table of the elements.

5. A preparation process according to claim 1 or claim 2, in which the metal M1 is platinum and the precursor M2 is selected from nickel, copper, silver, gold, indium, tin and germanium.

6. A preparation process according to one of the preceding claims, in which the quantity of metal M1 is in the range 0.01% to 5% by weight and the quantity of promoter M2 is in the range 0.5% to 10% by weight.

7. A preparation process according to one of the preceding claims, in which the support comprises at least one refractory oxide selected from oxides of metals from groups 2, 3, 4, 13 and 14 of the new periodic table of the elements.

8. A preparation process according to one of the preceding claims, in which the support is constituted by an alumina with a specific surface area in the range 5 to 200 m$^2$/g.

9. A process for treating an olefinic cut using the catalyst prepared in accordance with one of the preceding claims.

**10.** A treatment process according to claim 9, in which the olefinic cut is a light olefinic cut principally containing hydrocarbons containing 3, 4 or 5 carbon atoms.

**11.** A treatment process according to claim 9, in which the catalyst is employed in a fixed bed at a temperature in the range 10°C to 200°C, a pressure which is sufficient to maintain at least 80% by weight of the feed to be treated in the liquid phase at the reactor inlet, and an hourly space velocity in the range 1 to 50 h$^{-1}$.

**Patentansprüche**

**1.** Herstellverfahren eines Katalysators, der mindestens ein Metall M1 und einen Aktivator M2 auf einem Träger aufweist, wobei das Verfahren mindestens die folgenden Schritte aufweist:

a) Vorbereiten einer Oxidkolloidalsuspension eines ersten Metalls M1, bestehend im Neutralisieren einer basischen Lösung durch eine saure Minerallösung, die den Vorläufer des Metall M1 enthält,
b) Inkontaktbringen des Vorläufers des Aktivators M2, entweder direkt in seiner kristallisierten Form oder nach Auflösen in wässriger Lösung, mit der Kolloidallösung, die in Schritt a) erzielt wurde,
c) Inkontaktbringen der im Schritt b) erzielten Kolloidallösung mit dem Träger,
d) Trocknen bei einer Temperatur zwischen 30 °C und 200 °C unter einem Luftstrom.

**2.** Verfahren nach Anspruch 1, das ferner nach dem Schritt d) des Trocknens einen Schritt e) des Brennens unter einem Luftstrom bei Temperaturen zwischen 100 und 600 °C aufweist.

**3.** Verfahren nach einem der vorhergehenden Ansprüche, bei dem das Metall M1 ein Metall ist, das aus den Metallen der Gruppen 8, 9 oder 10 des neuen periodischen Systems der Elemente ausgewählt ist, vorzugsweise ein Edelmetall der Gruppen 8, 9 oder 10.

**4.** Verfahren nach einem der vorhergehenden Ansprüche, bei dem der Aktivator M2 aus den Gruppen 8, 9, 10, 11, 13 und 14 des neuen periodischen Systems der Elemente ausgewählt ist.

**5.** Verfahren nach einem der Ansprüche 1 oder 2, bei dem das Metall M1 und die Platte und der Vorläufer M2 aus Nickel, Kupfer, Silber, Gold, Indium, Zinn und Germanium ausgewählt sind.

**6.** Verfahren nach einem der vorhergehenden Ansprüche, bei dem der Gehalt an Metall M1 zwischen 0,01 und 5 Gew.-% liegt, und der Gehalt an Aktivator M2 zwischen 0,5 und 10 Gew.-% liegt.

**7.** Verfahren nach einem der vorhergehenden Ansprüche, bei dem der Träger mindestens ein feuerfestes Oxid aufweist, das aus den Oxiden der Metalle der Gruppen 2, 3, 4, 13 und 14 des neuen periodischen Systems der Elemente ausgewählt ist.

**8.** Verfahren nach einem der vorhergehenden Ansprüche, bei dem der Träger aus einem Aluminiumoxid mit spezifischer Oberfläche zwischen 5 und 200 m$^2$/g liegt.

**9.** Verfahren einer olefinischen Fraktion, die den nach einem der vorhergehenden Ansprüche vorbereiteten Katalysator umsetzt.

**10.** Verfahren nach Anspruch 9, bei dem die olefinische Fraktion eine leichte olefinische Fraktion ist, die im Wesentlichen Kohlenwasserstoffe zu 3, 4 oder 5 Kohlenstoffatomen enthält.

**11.** Verfahren nach Anspruch 9, bei dem der Katalysator in einem Festbett bei einer Temperatur zwischen 10 °C und 200 °C, einem ausreichenden Druck zum Aufrechterhalten von mindestens 80 Gew.-% der in flüssiger Phase zu behandelnden Charge am Eingang des Reaktors und einer GHSV zwischen 1 und 50 h$^{-1}$ umgesetzt wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5356851 A
- US 5464802 A
- US 4547600 A
- JP 59227829 B
- EP 0722776 A
- US 20020045544 A

**Littérature non-brevet citée dans la description**

- **J BARBIER ; J.M. DUMAS ; C. GERON ; H HADRANE.** *Appl. Catal,* 1994, vol. 179 (116), 1-2
- **S. SZABO ; I. BAKOS ; F. NAGY ; T. MALLAT.** *J. Electroanal. Chem.,* 1989, vol. 263, 137
- **M. BOUDART ; W.C. CHENG.** *J. Catal.,* 1987, vol. 106, 134
- **S. HUB ; L. HILAIRE ; R. TOUROUDE.** *Appl. Catal.,* 1988, vol. 36, 307
- **V PONEC ; G.C BOND.** Catalysis by Metal and Alloys. Elsevier, 1995
- **ROUSSET J.L. ; STIEVANO L. ; CADETE SANTOS AIRES F.J. ; GEANTET C. ; RENOUPREZ A.J. ; PELLARIN M.** *J. Catal.,* 2001, vol. 197 (2), 335
- CRC Handbook of Chemistry and Physics, Manuel CRC de Chimie et Physique. CRC Presse, 2000